# EUROPEAN PATENT SPECIFICATION

(11) **EP 0 444 734 B1**
(45) Date of publication and mention of the grant of the patent: **04.05.1994**
(21) Application number: 91200334.0
(22) Date of filing: 18.02.1991
(51) Int. Cl.: B65G 47/84

(54) **Conveyor**
Transportvorrichtung
Convoyeur

(30) Priority: 19.02.1990 NL 9000393
(43) Date of publication of application: 04.09.1991
(60) Divisional application: 93201502.7
(73) Proprietor: VANDERLANDE INDUSTRIES NEDERLAND B.V., NL-5466 RB Veghel (NL)
(72) Inventor: van den Goor, Jakobus Marie, NL-5674 SH Nuenen (NL)
(74) Representative: Vollebregt, Cornelis Jacobus, Ir.

(56) References cited:
- EP-A- 0 212 027
- FR-A- 852 176
- FR-A- 2 164 458
- FR-A- 2 388 737
- GB-A- 2 057 381
- US-A- 3 361 247

## Description

The invention relates to a conveyor having a frame and an endless drivable conveying means, provided with carriers which extend parallel to each other, transversely to the conveying direction of the conveyor, said carriers being coupled to at least one endless flexible coupling means, whilst at least some of said carriers support pusher shoes, said pusher shoes at desired locations being movable along the carriers in question, by guide means provided on the frame, the pusher shoes being supported on the carriers in question by means of rollers.

When such conveyors are used objects can be conveyed on an upper part of the endless conveying means, more in particular on the carriers forming said upper part of the conveying means, whilst at desired locations said objects can be pushed towards the side of the conveying means, so as to be delivered to further conveyors, discharge bands or the like at said location.

FR-A-2 388 737 discloses such a conveyor, wherein a carrier is formed by a plate-shaped means which is fixed with its ends to angle irons, which are connected to coupling means. Rods are provided under the carrier, between the angle irons, which support rollers connected to the pusher shoes. The construction of this known structure is complicated.

US-A-4,138,008 presents a conveyor wherein the carriers are built up of two U-sections accommodating rollers which are coupled to the pusher shoes. Also this construction is heavy and complicated.

US-A-3,361,247 discloses a conveyor having a pusher shoe supported by a single neck portion extending downwardly between adjacent carriers and secured to a body member which is slidably mounted on a rod extending below and parallel to a carrier. Further a roller coupled to the neck portion runs on an horizontal flange of a carrier.

According to the invention a pusher shoe is supported on parts of the carrier disposed under the upper side of a one-piece carrier by means of rollers, which are coupled to the pusher shoe in question by means of arms secured to said pusher shoe, said arms extending on both sides of the carrier in question through slots disposed between adjacent carriers, the rollers on both sides of the carriers engaging boundary planes, which include an angle with each other, of the carrier in question.

By using the construction according to the invention a simple and light construction of the carriers and of pusher shoes supported by said carriers can be provided, as well as an adequate guiding and support of the pusher shoes on the carriers.

The invention will be further explained hereafter with reference to a few possible embodiments of the construction according to the invention diagrammatically illustrated in the accompanying Figures.

Figure 1 is a perspective view of part of a conveying means of a conveyor according to the invention.

Figure 2 is a larger-scale sectional view of a carrier with a pusher shoe supported by the carrier.

Figures 3 - 6 are various possible embodiments of a switching construction according to the invention.

Figures 7 - 14 are cross-sectional views of various possible embodiments of carriers for use in a conveyor according to the invention.

The general principle of the conveyor according to the invention may e.g. be such as described in the US Patents 4,717,011 and 4,732,259. Therefore the general construction of the conveyor according to the invention is not described and shown herein, as it is considered to be obvious to those skilled in the art.

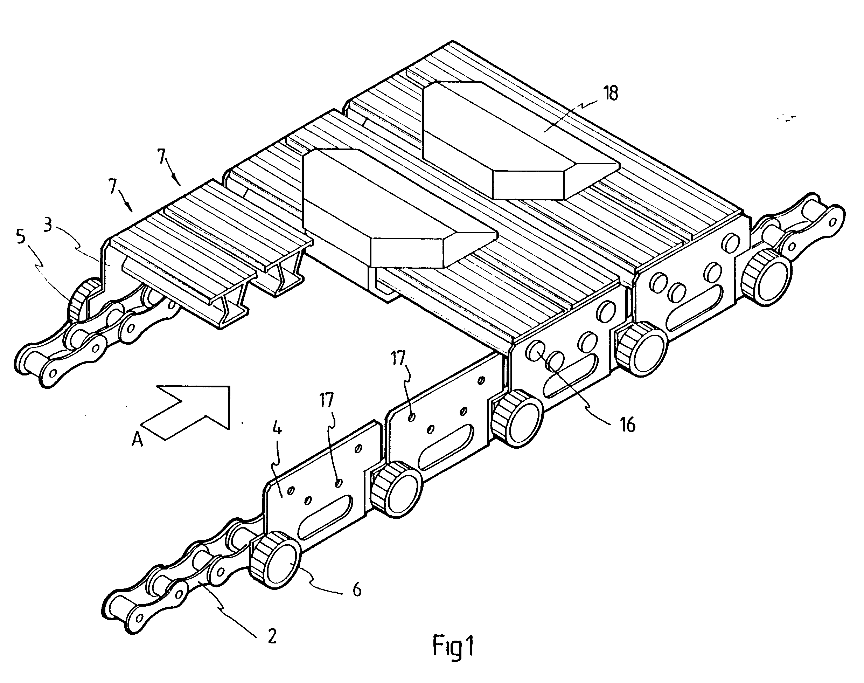

As is illustrated more in particular in Figure 1 the conveyor comprises an endless conveying means, which is only partially illustrated in Figure 1, said conveying means being provided with two endless coupling means formed by chains 1 and 2. The endless chains extending parallel to each other are passed over sprocket wheels and/or tensioning wheels (not shown), whereby at least a few of said sprocket wheels can be driven, so as to be able to move the upper parts of said chains illustrated in Figure 1 in the direction according to the arrow A.

Supporting plates 3 and 4, extending perpendicularly to the pivot pins of the chains, are secured to the chains in the manner illustrated in Figure 1. The supporting plates 3 and 4 respectively are thereby each pivotally coupled to the chain 1 or 2 in question in a single point, in such a manner that the pivot pin about which the supporting plate 3 or 4 can pivot with respect to the chain 1 or 2, coincides with the central axis of a pivot pin forming part of the chain in question. Near the pivot pin in question the chain is also provided with guide rollers 5 and 6 respectively, which support at least the upper parts of the chains 1 and 2 when they move in the direction according to the arrow A on supporting rails (not shown) or the like forming part of the device.

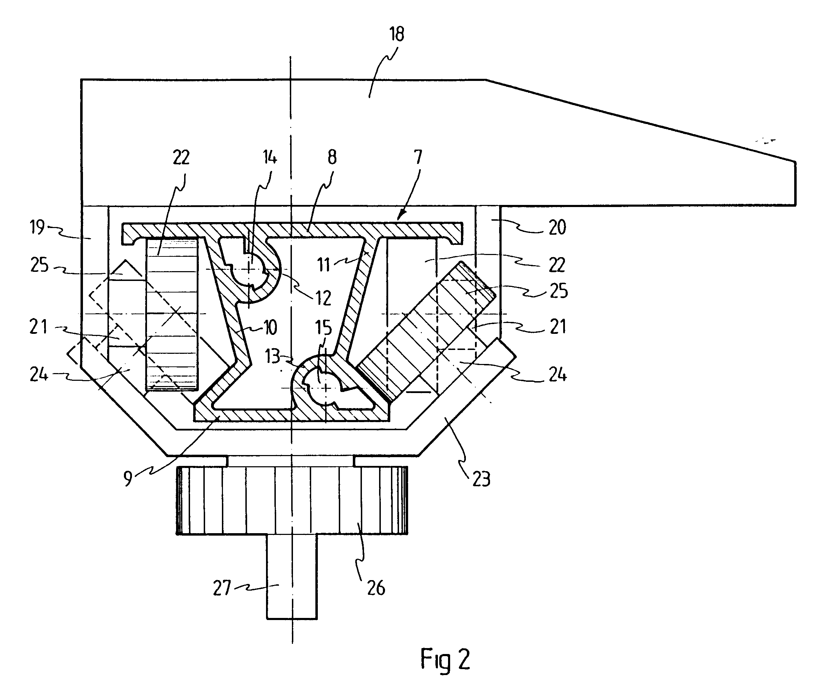

Two carriers 7 extending parallel to each other are provided between each pair of supporting plates 3 and 4. In the embodiment illustrated in Figures 1 and 2 the carriers 7 e.g. consist of sections extruded from aluminium or plastic material. Each section shown in Figures 1 and 2 thereby has a flat, plate-shaped, more particularly rectangular, upper side 8 and a bottom side 9 extending parallel to said upper side. The upper side 8 is connected to the bottom side by two wall parts 10 and 11 having a V-shaped section. Recesses 14 and 15 respectively are formed, by means of further wall parts 12 and 13 respectively, in the inner sides of said wall parts, said recesses functioning to receive connecting pins 16, which can be inserted into the holes 17 provided in the supporting plates 3 and 4 and into the recesses 14 and 15 in order to secure the ends of the carriers 7 in question to the supporting plates 3 and 4.

Each pair of supporting plates 3 and 4 therefore supports two carriers 7 extending parallel to each other, whilst a pusher shoe 18 located above each group of two carriers thus formed co-operates with said carriers. Embodiments wherein more than two, or only one, carriers are secured to a pair of supporting plates are also possible, however.

Arms 19 and 20 reaching downwards are mounted on the bottom side of the pusher shoes 18. The arm 20 thereby extends through the slot located between the upper sides 8 of the carriers 7 of a group supported by opposed supporting plates 3 and 4, whilst the arm 19 extends through the slot located between the rear boundary edge of the upper side of the rearmost carrier 7 associated with a group and the foremost boundary edge of a group of carriers supported by a pair of supporting plates when seen in the direction of movement of the carriers 7.

Pins 21 are secured to the sides of the arms 19 and 20 directed towards each other, rollers 22 being freely rotatable about said pins. As will be apparent from Figure 2 the axes of rotation of the rollers 22 lie in a plane extending perpendicularly to the longitudinal direction of the carrier 7 in question. The rollers 22 thereby bear against the bottom side of the plate-shaped upper side 8 of the carrier in question.

A coupling strip 23 extending under the carrier 7 in question is provided between the arms 19 and 20. Pins 24 are secured to the end of the coupling strip 23 located near the arms 19 and 20 respectively, rollers 25 being rotatable about said pins. As will be apparent from Figure 2 the axes of rotation of the rollers 25, which also lie in a plane extending perpendicularly to the longitudinal axis of the carrier 7 in question, cross the axes of rotation of the nearby rollers 22 at an angle of ± 45°. The rollers 25 are thereby supported on the lower parts of the V-shaped partitions 10 and 11 respectively.

It will be apparent that in this way the pusher shoe 18 is supported on the carrier 7, under the upper surface of said carrier, by means of the rollers 22 and 25, in such a manner that the pusher shoe 18 can be moved, with minimal effort, in the longitudinal direction of the carrier 7, whilst a movement transversely to the longitudinal axis of the carrier 7 will practically be ruled out.

To the bottom side of the connecting strip 23 there is furthermore secured a further guide means consisting of a roller 26 and a pin 27 projecting below said roller, said roller 26 being freely rotatable about said pin.

Assuming that the carriers 7 forming the upper part of the conveying means lie in a horizontal plane, the pin 27 extends vertically downwards from an associated carrier 7.

As will furthermore be apparent from Figure 1 the pusher shoe 18 supported by a single carrier 7 not only extends over the carrier in question, but also over part of the adjacent carrier associated with the same group.

As is explained in the above-mentioned US patent specifications the pusher shoes can be moved in the longitudinal direction of the device by guide means such as rails or the like during operation, which guide means are fixed to the frame and co-operate with the guide means 26, 27, so as to push objects present on the carriers off the conveying means formed by said carriers at desired locations. For moving the pusher shoes constructions may be used which are known per se, so that in this context it is considered superfluous to give a more detailed explanation of these constructions.

When passing sprocket wheels or the like the groups of carriers supported by the supporting plates 3 and 4 can pivot with respect to the chains because the supporting plates 3 and 4 are each pivotally coupled to the chains 1 or 2 in only one point.

As set forth above the pusher shoes are generally disposed in front of the point where the objects to be conveyed are placed on the conveying means, near the one or the other end of the associated carriers 7. This may e.g. be effected by means of suitable guide means incorporated in the frame of the device, which act on the guide means 26, 27 while they are being moved by the lower part of the conveying means.

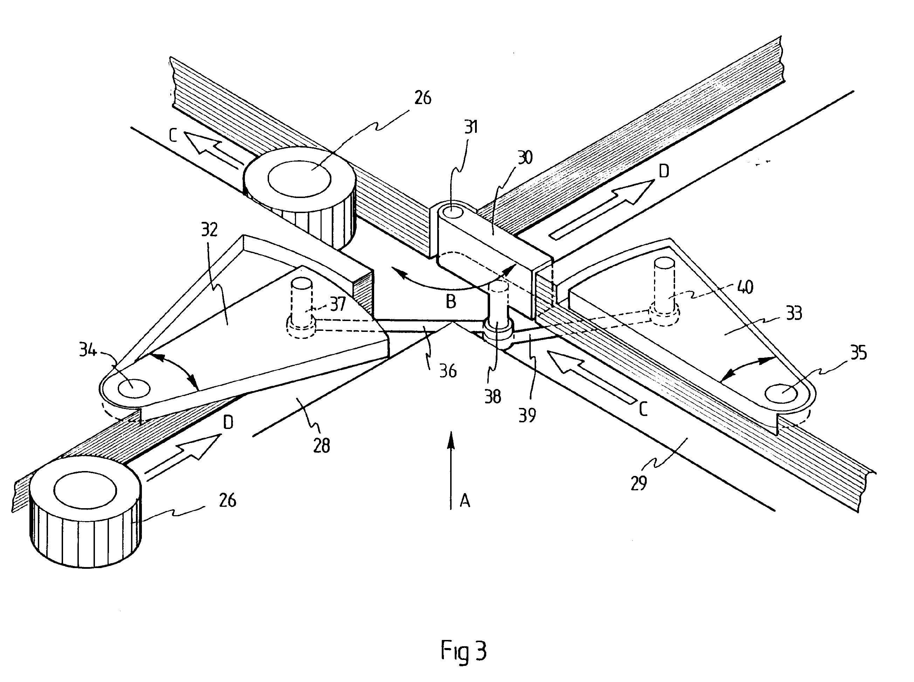

Near the intended point of discharge the pusher shoes in question are then moved, by means of suitable guide means, from the end where they are located in the direction of the other end of the carriers in question. In many cases discharge stations are located in opposed points on both sides of the conveying means, and therefore it will be possible that, dependent on the objects to be moved, in the one case a number of sliding shoes is to be moved along the carriers from the left toward the right and in the other case from the right toward the left, when seen in the direction of movement of the conveying means. In order to effect this intersecting guide rails, extending obliquely with respect to the direction of movement of the carriers with a switching construction are arranged adjacent the discharge stations. A first possible embodiment of said construction is diagrammatically illustrated in Figure 3. The direction of movement of the carriers 7 will again be in the direction according to the arrow A in this Figure. Two intersecting, diagrammatically illustrated rails 28 and 29 are provided, so as to guide a guide means 26 coupled to a pusher shoe. A switch blade 30 is disposed near the point of intersection of said rails, said switch blade being pivotable about a usually vertical axis 31, more specifically through an angle of 90°, as is indicated by means of the arrow B. In the position of the switch blade 30 illustrated in Figure 3 a guide means 26 can move freely through the rails 29, as is indicated by means of the arrows C, whilst the passage through the rail 28 is closed. When the switch blade is pivoted through 90°, as is indicated by means of the arrow B, the switch blade will allow a guide means 26 to pass unimpededly through the rail 28, in the direction according to the arrow D, whilst the passage through the rail 29 is closed.

In order to effect the pivoting motion of the switch blade operating means 32 and 33 respectively are provided upstream of the point of intersection of the two rails, near the rails 28 and 29 in question, said operating means being formed by segmented plates, which are pivotable with respect to the frame about pivot pins 34 and 35 respectively extending parallel to the pivot pin 31, said pivot pins being arranged near the upstream ends of the segmented plates 32 and 33 respectively.

As is furthermore illustrated in Figure 3 a coupling rod 36 is coupled to the operating means 32 at one end, by means of a pivot pin 37 extending parallel to the pivot pin 34, and at its other end to a pin 38 secured to the switch blade 30. One end of further coupling rod 39 is coupled to said pin 38, while the other end is coupled to the operating means 33 by means of a pin 40.

In the position illustrated in the Figure the operating means 32 associated with the rail 38 lies in the path of movement of a guide means 26 moving through the rail 28 in question. It will be apparent that when said guide means 26 moving through the rail 28 comes into contact with the operating means 32, said operating means 32 will be pivoted anti-clockwise about the pin 34, when seen in Figure 3. Said pivoting will cause the switch blade 30 to pivot about the pin 31, from the position illustrated in Figure 3 into the position in which the guide means moving through the rail 28 can pass the point of intersection of the two rails 28 and 29 without impediment. At the same time the operating means 33 is pivoted into a position in which said operating means lies in the path of an operating means moving through the rail 29. As long as guide means 26 move through the rails 28 the operating means associated with the rail 29 and also the switch blade 30 will maintain the position they have taken, but when a guide means 26 approaches the point of intersection of the rails 28 and 29 through the rails 29, the operating means 33 will be pivoted again, and the switch blade 30 as well as the operating means 32 will be returned to the position illustrated in Figure 3.

It will be apparent that operating means, which are mechanically coupled to the switch blade and which are put into operation by the guide means coupled to the pusher shoes, can at all times position the switch blade such that an unimpeded passage of the operating means through an intersection is ensured.

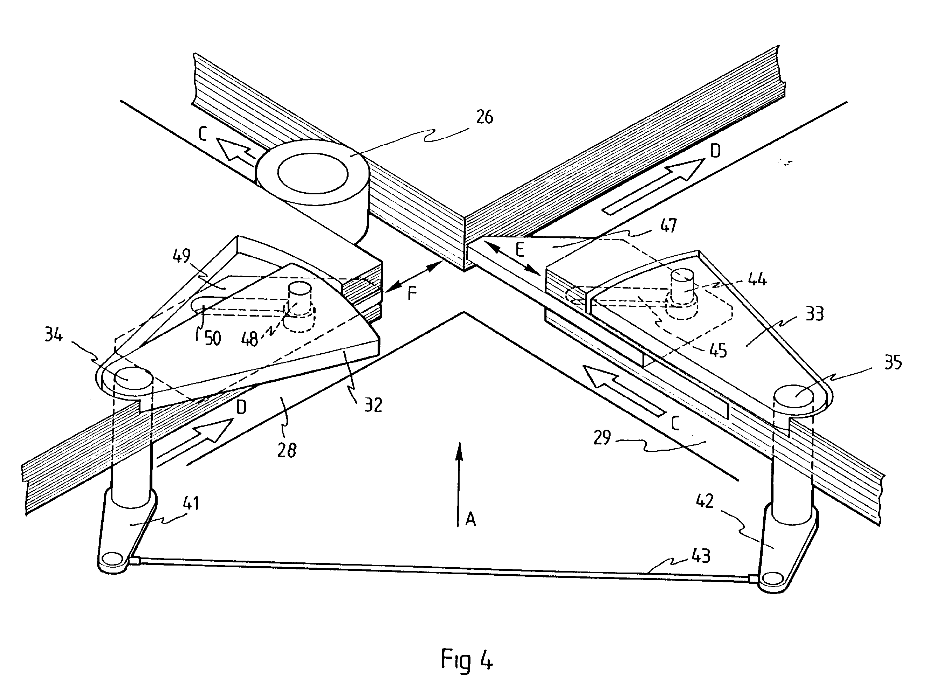

Of course variations to the embodiment of the switch construction illustrated in Figure 3 are conceivable within the spirit and scope of the invention. A few further possible embodiments are illustrated in Figures 4 - 6, in which those parts that correspond with parts described with reference to Figure 3 have been given the same reference numbers as in Figure 3.

With the construction illustrated in Figure 4 the pivot pins 34 and 35 supporting the operating means 32 and 33 are extended and provided with arms 41 and 42 respectively secured to said pins, said arms being interconnected by means of a coupling rod 43.

Furthermore a pin 44 is secured to the operating means 33, one end of said pin being located in a slotted hole 45 provided in a switch blade 47. Said switch blade 47 is supported by the frame of the device in such a manner that the switch blade can move parallel to the longitudinal direction of the rail 29, as is indicated by means of an arrow E. The slotted hole 45 extends obliquely with respect to said direction of movement according to the arrow E.

Similarly a pin 48 is secured to the operating means 32, said pin with one end being located in a slotted hole 50 provided in a switch blade 49. Said switch blade 49 is movable in the direction according to the arrow F, parallel to the longitudinal direction of the guide rail 29, whilst the slotted hole 50 includes an acute angle with the longitudinal direction of said guide rail 28.

A closer look at Figure 4 will show that when a guide means 26 moving through the rail 28 in the direction according to the arrow D comes into contact with the operating means 32, said operating means will be pivoted anti-clockwise about the central axis of the pin 34. As a result of said pivoting the switch blade 49 will be moved in the direction according to the arrow F into a position in which said switch blade closes the passage through the rail 29.

Pivoting of the operating means 32 via the arms 41 and 42 and the coupling rod 43 will furthermore cause the operating means 33 to pivot as well, from the position illustrated in Figure 4 into a position in which the operating means will come to lie in the path of movement of a guide means moving through the rail 29. As a result of said movement the switch blade 47 will be withdrawn from the position illustrated in Figure 4, in which the passage through the rail 28 is closed, into a position in which the passage through the rail 28 is released.

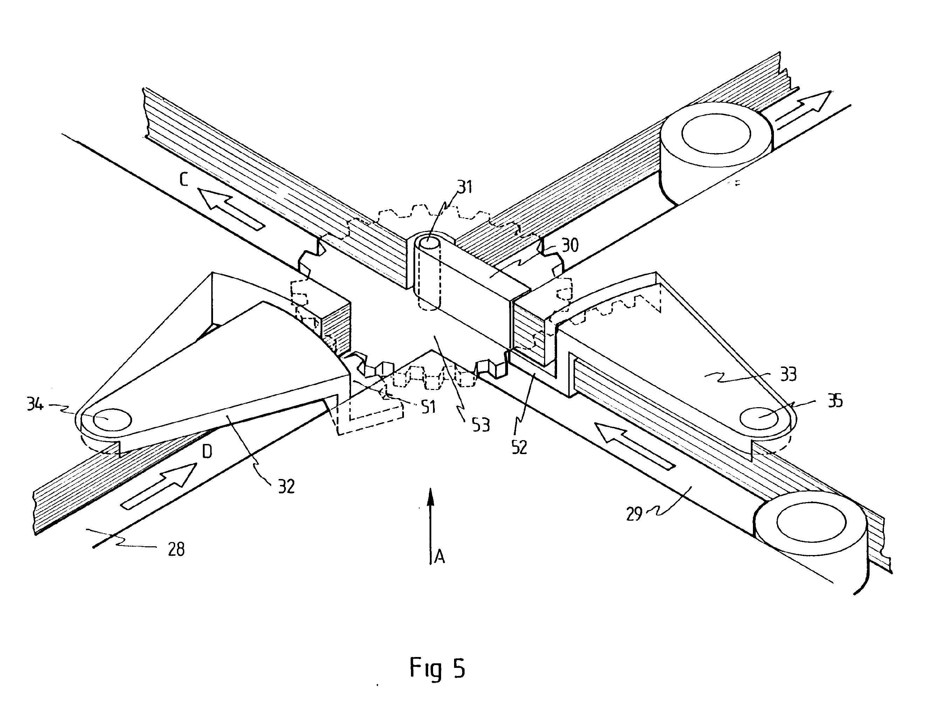

In the embodiment according to Figure 5 the two operating means 32 and 33 are provided with gear segments 51 and 52, which are fixedly connected to said operating means, said gear segments being interconnected by means of a sprocket wheel 53, which is secured to the pin 31 supporting the switch blade 30.

It will be apparent that pivoting of an operating means 32 or 33, caused by a guide means co-operating therewith, will lead to pivoting of both the switch blade 30 and the other operating means, in a manner similar to that described with reference to Figure 3.

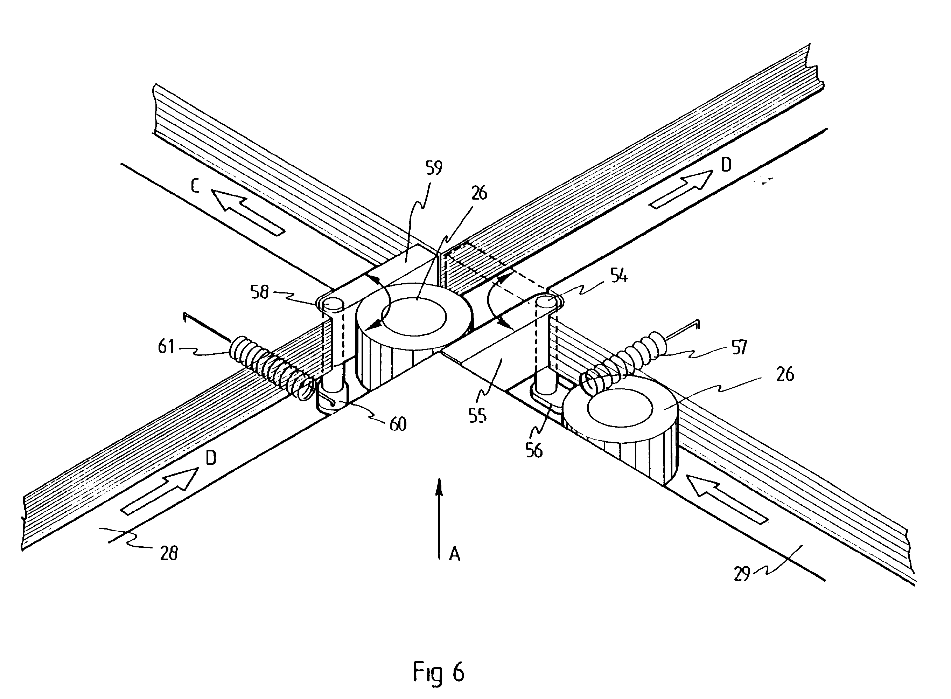

In the embodiment according to Figure 6 a vertical pin 54 is disposed near of side of the rail 29, upstream of the point of intersection of the rails 28 and 29 when seen in the direction of movement of a guide means 26 along the rail 29, to which pin there is secured a switch blade 55. An arm 56 is furthermore secured to the pin 54, to which the end of a tension spring 57 is hooked. The other end of said tension spring 57 is hooked behind a fixed point of the frame of the device. The construction is thereby such that the tension spring 57 attempts to keep the switch blade 55 in the position illustrated with full lines in Figure 6, in which the switch blade 55 releases the passage through the rail 28, and further pivoting is limited by a stop (not shown).

In a similar manner a pin 58, which extends parallel to the pin 54, is provided near one side of the guide rail 28, upstream of the point of intersection between the guide rails 28 and 29. Said pin 58 supports a switch blade 59. To the pin 58 there is furthermore secured an arm 60 again, a tension spring 61 being provided between the arm 60 and the frame. The construction is thereby such that the tension spring 61 tends to keep the switch blade 59 in a position in which said switch blade extends transversely to the longitudinal direction of the rail 28. When a guide means 26 moves along the guide rail 28 in the direction according to the arrows D, however, a relevant guide means will press the switch blade 59 against the force of the spring 61 into the position illustrated in Figure 6, so that the guide means, guided by the switch blades 55 and 59 can pass the intersection through the rail 28 in question without impediment. Upon passage of such a guide means the switch blade 59 will return to a position extending perpendicularly to the longitudinal direction of the rail 28, so influenced by the spring 61. When subsequently a guide means moves through the rail 29, the switch blade 59 will maintain its latter position, whilst the switch blade 55 will be pivoted from the position illustrated with full lines in Figure 6 to the position illustrated with dotted lines in Figure 6. It will be apparent that the guide means then moving along the guide rail 29 can move through the rail 29 and pass the point of intersection of the rails 28 and 29 without impediment.

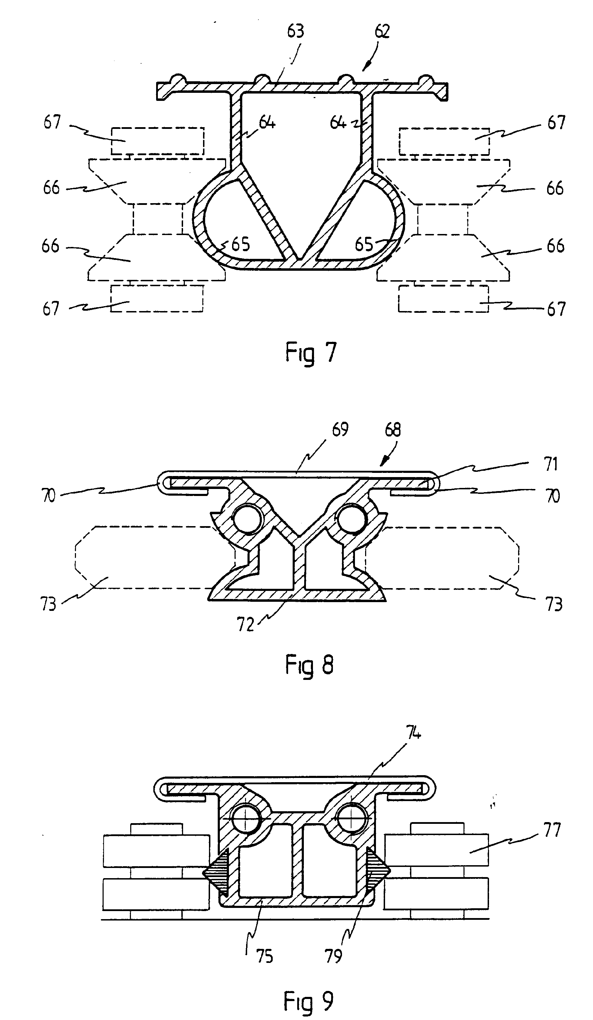

Also for the construction of the carriers and the pusher shoes co-operating therewith many variations are conceivable within the spirit and scope of the invention. A few possible embodiments will be discussed below with reference to Figures 7 - 14.

Figure 7 shows a cross-section of a carrier 62 provided with a flat, plate-shaped upper side 63 for supporting products to be conveyed. Guide members 65, which are outwardly curved when seen in section, of the carrier are coupled to the upper side 63 of the carrier by means of two legs 64 extending downwards from said plate-shaped upper side.

Each guide member 65 is confined between two conical guide wheels 66, in the manner illustrated in Figure 7. These pairs of guide wheels 66 disposed on both sides of the carrier 62 are rotatably journalled in supports 67, which are connected, in a manner not shown, to a pusher shoe which is movable across the upper side of the carrier 62.

Figure 8 shows a sectional view of a carrier 68, whose plate-shaped upper side 69 is formed by a plate-shaped member, whose boundary edges 70 are folded over the upper edges 71 of a section 72. The sides of the section 72 have a more or less V-shaped section, so as to co-operate with guide wheels 73 engaging the V-shaped grooves thus formed with their outer circumference, said guide wheels being connected, in a manner not shown, to a pusher shoe which is movable across the carrier 68 in question.

With the above-described embodiments, and also in further embodiments to be described in more detail hereafter, the surfaces of the carriers with which the rollers co-operate are coated with a suitable plastic material if the carriers are made of a metal or the like. When using the construction illustrated in Figure 8 the actual supporting part 72 of the carrier may be formed of another material than the upper side 69 of the carrier that comes into contact with the objects to be moved, so that an optimum adaptation of materials can be achieved.

With the embodiment illustrated in Figure 9, in a similar manner as in Figure 8, the plate-shaped upper surface 74 of the carrier is made of another material than the actual part of the extruded beam 75 forming the carrier. In this embodiment dovetailed grooves are formed in opposed boundary planes of the beam 75, into which grooves stock guides 76 extending in the longitudinal direction and having a triangular section, which are e.g. made of a plastic material or another suitable material, are inserted. Said stock guides co-operate with guide rollers 77 engaging on both sides of the stock guides, said guide rollers in turn being coupled, in a manner not shown, to a pusher shoe which is movable across the upper side of the carriers.

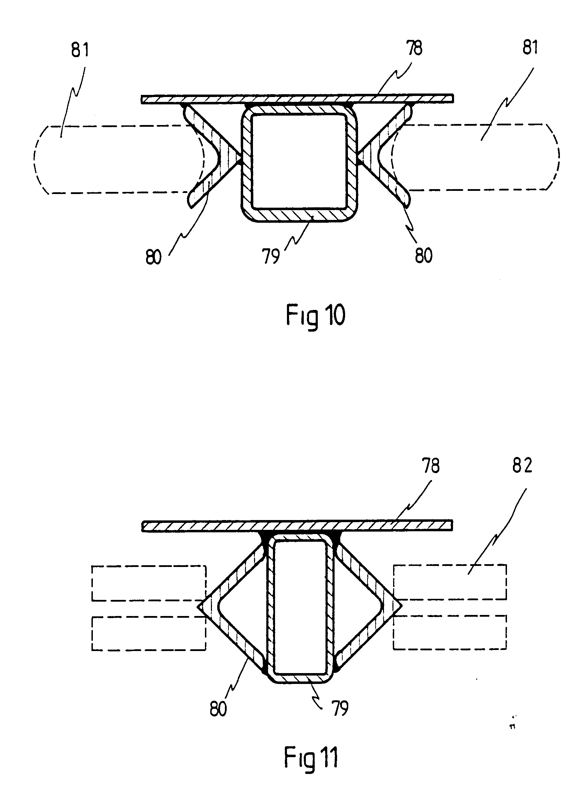

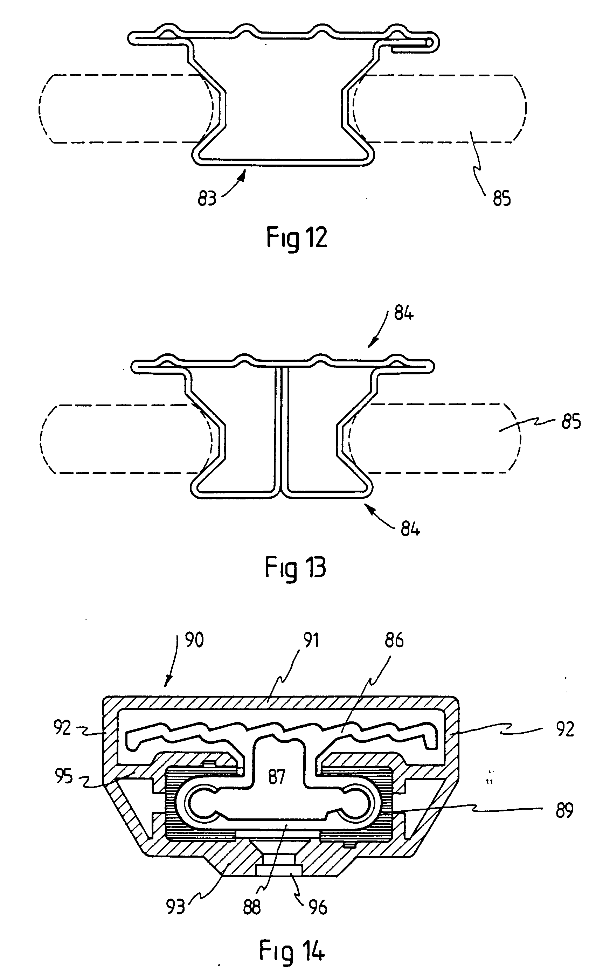

The above embodiments of the carriers are at least substantially formed of extruded sections. As illustrated in Figures 10 and 11, however, it is also possible to form a carrier by welding together commercially available sections.

With the embodiment according to Figure 10 the carrier is thus built up of a flat plate 78 forming the upper side of the carrier, said plate being secured to the upper side of a box girder 79 having a rectangular section, extending in the longitudinal direction of the carrier. On both sides of said box girder angle irons 80 extending in the longitudinal direction of the carrier are provided in the illustrated manner, said angle irons co-operating with guide wheels 81, whose outer circumference engages the angle irons 80 in the illustrated manner. The guide wheels 81 in turn are coupled, in a manner not shown, to a pusher shoe which is movable across the plate 78 in the longitudinal direction of the carrier.

The embodiment according to Figure 11 is built up of the same type of components as the embodiment according to Figure 10, consequently corresponding parts have been given the same reference numerals in this embodiment. The angle irons 80 are coupled to the rectangular section 79 in a position turned through 180°, however, and the angle irons thereby co-operate with guide wheels 82 engaging the angle irons. Said guide wheels will in turn be coupled in a usual manner to a pusher shoe which is movable across the upper side of the carrier, in the longitudinal direction of the carrier.

Figures 12 and 13 show sectional views of two embodiments of carriers 83 and 84 respectively, which are folded of a plate-shaped material. The construction of the carriers 83 and 84 will be apparent from the Figures. Because in the embodiment according to Figure 13 the two ends of the plate-shaped part of which the carrier has been folded form a reinforcing rib located near the centre of the carrier and extending in the longitudinal direction of the carrier, such an embodiment can be made stronger than the embodiment according to Figure 12.

In both embodiments opposed boundary walls which are located under the upper surface of the carrier are again shaped such that their profile is more or less V-shaped, so as to receive the circumferences of guide wheels 85 co-operating therewith, said guide wheels being coupled, in a manner not shown, to a pusher shoe which is movable across the upper side of the carrier in question.

Figure 14 shows an embodiment of a carrier comprising a flat, plate-shaped upper side 86, which is coupled, by means of two legs 87 extending downwards from said upper side, to a double-walled section part 88 having rounded corners, which extends parallel to the plate-shaped upper side. Complementarily shaped skids 89 of plastic material or the like are provided around the ends of the section part 88, said skids functioning to support a pusher shoe 90 which is movable in the longitudinal direction of the carrier illustrated in sectional view in Figure 14. Said pusher shoe is provided with a pusher part 91 extending above the plate-shaped part 86 of the carrier, whereby the boundary edges of said pusher part are joined by arms 92 which extend downwards on both sides of the plate-shaped upper side 86 of the carrier, the ends of said arms, which slope downwards in a direction towards each other, being interconnected by means of a connecting plate 93. The skids 89 are thereby confined, in the manner illustrated in Figure 14, between said connecting plate 93 and supporting arms 95 located between the pusher plate 91 and the connecting plate 93. In the connecting plate there is furthermore provided a hole 96 for a guide means to be mounted therein.

## Claims

1. A conveyor having a frame and an endless drivable conveying means, provided with carriers (7) which extend parallel to each other, transversely to the conveying direction (A) of the conveyor, said carriers (7) being coupled to at least one endless flexible coupling means (1, 2), whilst at least some of said carriers (7) support pusher shoes (18), said pusher shoes (18) being movable along the carriers (7) at desired locations by guide means (28, 29, 30) provided on the frame, the pusher shoes (18) being supported on the carriers (7) by means of rollers (22, 25), characterized in that each pusher shoe (18) is supported on parts (9) of the carrier (7) disposed under neath the upper side of a one-piece carrier (7) by means of the rollers (22, 25), which are coupled to the pusher shoe by means of arms (19, 20) secured to said pusher shoe, said arms extending on both sides of the carrier through slots between adjacent carriers (7), the rollers on both sides of the carrier (7) engaging boundary planes of the carrier which include an angle with each other.

2. A conveyor according to claim 1, characterized in that the upper side (8) of a carrier (7) has a substantially flat, plate-shaped form.

3. A conveyor according to claim 1 or 2, characterized in that a pusher shoe extending over one or more carriers (7) is supported by only one carrier.

4. A conveyor according to claim 3, characterized in that two carriers (7) co-operating with a pusher shoe (18) are pivotally coupled, as a unit, to the endless flexible coupling means (1, 2).

5. A conveyor according to any one of the preceding claims, characterized in that a carrier (7) consists of an extruded section.

6. A conveyor according to any one of the claims 1 - 4, characterized in that a carrier (83) is folded of a piece of sheet material.

7. A conveyor according to any one of the claims 1 - 4, characterized in that a carrier is welded together from commercially available sections (78 - 80).

8. A conveyor according to any one of the preceding claims, characterized in that two rollers (22, 25) engage each side of a carrier (7), the axes of rotation of said rollers including an angle with each other.

9. A conveyor according to any one of the preceding claims 1 - 7, characterized in that the sides of a carrier (68) are more or less V-shaped, said sides being engaged by the circumferences of guide wheels (73), which are rotatable about axes of rotation crossing the longitudinal axis of the carrier perpendicularly.

10. A conveyor according to any one of the preceding claims 1 - 7, characterized in that the sides of a carrier have projecting parts (79), which are confined between two guide wheels (77) arranged one above the other, said guide wheels being rotatable about axes of rotation extending perpendicularly to the longitudinal axis of the carrier (74, 75).

## Patentansprüche

1. Förderer mit einem Rahmen und einem endlos angetriebenen Fördermittel, ausgestattet mit Trägern (7), welche sich parallel zueinander erstrecken, quer zu der Förderrichtung (A) des Förderers, wobei die Träger (7) an mindestens einem endlosen flexiblen Kupplungsmittel (1,2) angekuppelt sind, während wenigstens einige der Träger (7) Schubschuhe (18) tragen, die entlang der Träger (7) durch Führungsmittel (28,29,30), die an dem Rahmen vorgesehen sind, in gewünschten Stellen bewegbar sind, wobei die Schubschuhe (18) auf den Trägern (7) mittels Rollen (22,25) getragen werden, dadurch gekennzeichnet, daß jeder Schubschuh (18) getragen wird auf Teilen (9) des Trägers (7), angeordnet unter der Oberseite eines einstückigen Trägers (7) mittels der Rollen (22,25), die an dem Schubschuh über Arme (19,20) angekuppelt sind, die an dem Schubschuh befestigt sind, wobei die Arme sich auf beiden Seiten des Trägers durch Schlitze zwischen benachbarten Trägern (7) erstrecken, und daß die Rollen an beiden Seiten des Trägers (7) mit Grenzflächen des Trägers, die einen Winkel miteinander einschließen, in Berührung sind.

2. Förderer nach Anspruch 1, dadurch gekennzeichnet, daß die Oberseite (8) des Trägers (7) eine im wesentlichen flache, plattenförmige Form hat.

3. Förderer nach Anspruch 1 oder 2, dadurch gekennzeichnet, daß ein Schubschuh sich über einen oder mehrere Träger (7) erstreckt und durch nur einen Träger getragen wird.

4. Förderer nach Anspruch 3, dadurch gekennzeichnet, daß zwei Träger (7), die mit einem zugeordneten Schubschuh (18) zusammenwirken, als Einheit am endlosen flexiblen Kupplungsmittel (1,2) drehbar gekuppelt sind.

5. Förderer nach einem der vorhergehenden Ansprüche, dadurch gekennzeichnet, daß ein Träger (7) aus einem extrudierten Abschnitt besteht.

6. Förderer nach einem der Ansprüche 1 bis 4, dadurch gekennzeichnet, daß ein Träger (83) aus einem Stück Blechmaterial gefaltet ist.

7. Förderer nach einem der Ansprüche 1 bis 4, dadurch gekennzeichnet, daß ein Förderer aus handelsüblich erhältlichen Abschnitten (78-80) zusammengeschweißt ist.

8. Förderer nach einem der vorhergehenden Ansprüche, dadurch gekennzeichnet, daß zwei Rollen (22,25) in Eingriff sind mit jeder Seite eines Trägers (7), wobei die Rotationsachsen der Rollen einen Winkel miteinander einschließen.

9. Förderer nach einem der vorhergehenden Ansprüche 1 bis 7, dadurch gekennzeichnet, daß die Seiten eines Trägers (68) mehr oder weniger V-förmig sind und in Eingriff sind mit den Umfängen von Führungsrädern (73), welche um Rotationsachsen drehbar sind, welche die Längsachse des Trägers im rechten Winkel kreuzen.

10. Förderer nach einem der vorhergehenden Ansprüche 1 bis 7, dadurch gekennzeichnet, daß die Seiten eines Trägers vorspringende Teile (79) haben, welche begrenzt sind zwischen zwei Führungsrädern (77), die übereinander angeordnet sind, wobei die Führungsräder drehbar sind um Rotationsachsen, die sich rechtwinklig zur Längsachse des Trägers (74,75) erstrecken.

## Revendications

1. Convoyeur comprenant un châssis et des moyens de transport sans fin à entraînement, équipés avec des éléments porteurs (7) qui s'étendent parallèlement les uns aux autres et transversalement à la direction de transport (A) du convoyeur, lesdits éléments porteurs (7) étant reliés à au moins un dispositif de couplage flexible sans fin (1,2) tandis qu'au moins certains desdits éléments porteurs (7) supportent des patins poussoirs (18), lesdits patins poussoirs (18) étant déplaçables le long des éléments porteurs (7) à des positions désirées par des moyens de guidage (28,29,30) prévus sur le châssis, les patins poussoirs (18) étant supportés sur les éléments porteurs (7) par l'intermédiaire de galets (22,25), caractérisé en ce que chaque patin poussoir (18) est supporté sur des parties (9) de l'élément porteur (7) situées au-dessous de la face supérieure d'un élément porteur monobloc (7) par l'intermédiaire des galets (22,25) qui sont reliés au patin poussoir par des bras (19,20) fixés audit patin poussoir, lesdits bras s'étendant des deux côtés de l'élément porteur à travers des fentes définies entre des éléments porteurs adjacents (7), les galets situés de part et d'autre de l'élément porteur (7) étant en contact avec des plans de délimitation de l'élément porteur qui forment un angle entre eux.

2. Convoyeur suivant la revendication 1, caractérisé en ce que la face-supérieure (8) d'un élément porteur (7) est en forme de plaque sensiblement plate.

3. Convoyeur suivant la revendication 1 ou 2, caractérisé en ce qu'un patin poussoir s'étendant sur un ou plusieurs éléments porteurs (7) est supporté par un seul élément porteur.

4. Convoyeur suivant la revendication 3, caractérisé en ce que deux éléments porteurs (7) coopérant avec un patin poussoir (8) sont reliés de façon pivotante, comme un ensemble, au dispositif de couplage flexible sans fin (1,2).

5. Convoyeur suivant une quelconque des revendications précédentes, caractérisé en ce qu'un élément porteur (7) est constitué d'un profilé extrudé.

6. Convoyeur suivant une quelconque des revendications 1 à 4, caractérisé en ce qu'un élément porteur (83) est constitué d'une tôle pliée.

7. Convoyeur suivant une quelconque des revendications 1 à 4, caractérisé en ce qu'un élément porteur est formé par soudage de profilés du commerce (78-80).

8. Convoyeur suivant une quelconque des revendications précédentes, caractérisé en ce que deux galets (22, 25) sont en contact avec chaque côté d'un élément porteur (7), les axes de rotation desdits galets formant un angle entre eux

9. Convoyeur suivant une quelconque des revendications 1 à 7 , caractérisé en ce que les côtés d'un élément porteur (68) sont sensiblement en forme de V, les dits côtés étant en contact avec les circonférences de galets de guidage (73) qui peuvent tourner autour d'axes de rotation croisant perpendiculairement l'axe longitudinal de l'élément porteur.

10. Convoyeur suivant une quelconque des revendications précédentes 1 à 7, caractérisé en ce que les côtés d'un élément porteur présentent des parties saillantes (79) qui sont emprisonnées entre deux galets de guidage (77) disposés l'un au-dessus de l'autre, lesdits galets de guidage pouvant tourner autour d'axes de rotation perpendiculaires à l'axe longitudinal de l'élément porteur (74,75).
